# EUROPEAN PATENT APPLICATION

(11) **EP 2 579 194 A1**
(43) Date of publication of application: **10.04.2013**
(21) Application number: 11183811.6
(22) Date of filing: 04.10.2011
(51) Int. Cl.: G06Q 20/00

(54) **Providing increased ability to perform a transaction based on locale**

(71) Applicant: Research In Motion Limited, Waterloo, ON N2L 3W8 (CA)
(72) Inventor: Scott, Sherryl Lee Lorraine, Waterloo, Ontario N2L 3W8 (CA)
(74) Representative: Patel, Binesh

(57) **Abstract**

A method and system that enables a user to select a default currency to be used with the mobile device and associate it with the currency selector of the device. When using the mobile device for mobile payments in a locale with a different currency than the user's default or home currency, the user can actuate the currency selector to convert the currency amount to the default currency and easily determine the default equivalent currency.

## Description

### TECHNICAL FIELD

The present disclosure relates to the field of mobile devices, and more specifically, to a method and system for enabling locale based currency conversion when performing mobile payment transactions using a mobile device.

### BACKGROUND

Mobile devices or handheld electronic devices, such as cell phones or mobile phones, have become increasingly part of everyday life and can be used to facility payment rather than traditional cash, credit card or debit card transactions. The adoption of mobile payment systems using proximity based payment solutions, such as those using near field communications (NFC), have enabled transactions to occur with a swipe of a device over a reader at a point-of-sale NFC device. The electronic transaction enables money to be transferred or charged to an account by using an e-wallet and can reduce the need to carry traditional payment forms. However with each locale, a different currency may be used to facilitate the transaction. As a user of a mobile device travels easily understanding the cost of a transaction can be difficult in real-time mobile payment transactions. In performing a mobile payment transaction, or when a user desires to cost out something in currencies different than the base currency, it can be difficult for the user to determine and understand the cost of the transaction easily.

Therefore there is a need for an improved method and system for performing currency specific mobile payment transactions a on a mobile device.

### SUMMARY

In accordance with an aspect of the present disclosure there is provided a method for performing a locale specific transaction on a mobile device. The method comprises the steps recited in claim 1.

In accordance with another aspect of the present disclosure there is provided a system for performing a locale specific transaction on a mobile device a receiver for communicating with mobile payment devices; a display; a processor coupled to the receiver of the mobile device; a memory coupled to the processor containing instructions which when executed by the processor for executing the method of claim 1.

In accordance with yet another aspect of the present disclosure there is provided a computer readable memory containing instructions for performing a locale specific transaction on a mobile device, the instructions when executed by a processor the for implementing a method according to claim 1.

Other aspects of the present disclosure will be apparent to those of ordinary skill in the art from a review of the following detailed description in conjunction with the drawings. Embodiments of the present disclosure are not limited to any particular operating system, mobile device architecture, server architecture, or computer programming language.

### BRIEF DESCRIPTION OF THE DRAWINGS

Further features and advantages of the present disclosure will become apparent from the following detailed description, taken in combination with the appended drawings, in which:
Figure 1 is a representation of a mobile device changing locations;
Figure 2 shows a representation of currency selection on a mobile device;
Figure 3 shows a representation of a location change notification on a mobile device;
Figure 4 shows an alternative representation of currency selection on a mobile device;
Figure 5 shows a representation of a mobile payment transaction confirmation;
Figure 6 shows a representation of a currency conversion notification on a mobile device having a touch screen;
Figure 7 shows a representation of a currency conversion notification on a mobile device having a keyboard;
Figure 8 shows a schematic representation of a mobile device;
Figure 9 shows a method of default currency assignment;
Figure 10 shows an alternative method of default currency assignment;
Figure 11 shows a method of currency conversion for a mobile payment transaction on a mobile device;
Figure 12 shows an alternative method of currency conversion for a mobile payment transaction on a mobile device; and
Figure 13 shows a method of multiple currency selector actuations.

It will be noted that throughout the appended drawings, like features are identified by like reference numerals.

### DETAILED DESCRIPTION

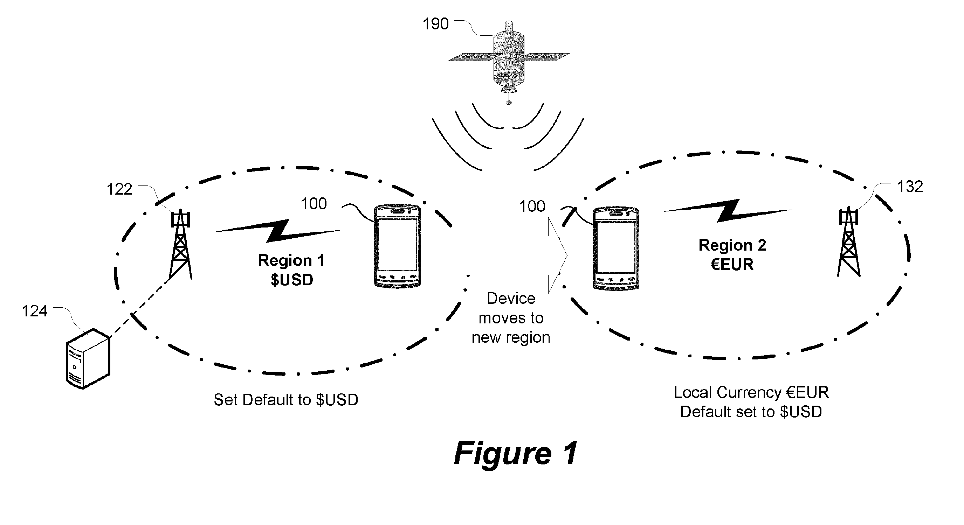

Embodiments are described below, by way of example only, with reference to Figures 1-13.

The disclosed system and method allows a user to select a default currency to be used with the mobile device and associate it with the currency selector of the device. When using the mobile device for mobile payment electronic commerce transaction in a locale with a different currency than the user's default or home currency, the user can actuate the currency selector to convert the currency amount to the default currency and easily determine the default equivalent currency value. The currency selector allows amounts to be converted between currencies on the mobile device without the requirement for executing additional applications or processes. The mobile device enables changes in currency to be identified based upon a change in location of the device and enables the user to transact mobile payment in different currencies while being able to view or understand the cost in a default currency they are more familiar with.

Mobile devices are generally intended to be portable, and thus are of a relatively compact configuration in which keys and other input structures often perform multiple functions under certain circumstances or may otherwise have multiple aspects or features assigned thereto. As a practical matter, the keys of a keypad, either in a physical form or presented on the display of the mobile device in a virtual keyboard, can only be reduced to a certain small size before the keys become relatively unusable. Typically only a single currency character or symbol can present itself on the keyboard, within a symbol screen or within a user interface display as a choice due to space constraints. This means the user must change the currency associated with the particular key or component which enables this via configuration of the device. The currency selector or component may be configured to cycle through preferred currencies but a default currency is usually assigned but has only been utilized for presenting a currency symbol in text entry applications.

For mobile devices with limited input real-estate a currency selector is provided that enables the user to select a default currency symbol to be used by the mobile device rather than presenting all the possible currency symbols on the keyboard to conserve space. When the user presses or actuates the currency selector an input signal is used by the mobile device to select the predetermined default currency or convert a transaction from a default currency to an alternative currency.

Figure 1 is a representation of a mobile device changing locations between two distinct regions. When a user of a mobile device 100 first configures the mobile device 100, regional information can be defined or selected such as time format, number formatting, text formatting, language selection and currency symbols. Alternatively the regional information may be automatically determined by the mobile device based upon wireless network 122 parameters such as system or network identifiers or by a physical location of the device such as provided by a global positioning system (GPS) 190. For example in region 1, a home area or default location for the device, the device 100 is associated with a default currency, for example $USD US dollars. When a user travels to a new region 2 where a different currency is utilized for example € Euros, the keyboard or input method may still use the same symbol and conversion of currencies can be inconvenient and difficult for the user to understand the true cost of the transaction in a default currency.

With the present system and method when the mobile device 100 changes locations it can determine that a local currency other than the default currency will be used in mobile payment transactions. The mobile device 100 can determine a location change based upon wireless network 132 parameters or by determining a location change of the mobile device 100 using GPS 190 positioning information. A query to a remote data source 124, through the wireless network, or to a database stored in memory of the device 100 may determine the currency, or currencies, associated with the determined location and associated region. When the user wants to perform a mobile payment electronic transaction, using for example near-field communication (NFC) point-of-sale (POS) mobile payment transactions, the currency selector on the mobile device 100 can be used to convert local currency of region 2 to default currency of region 1. This enables the user to conveniently understand the cost of the transaction when differing currencies are used.

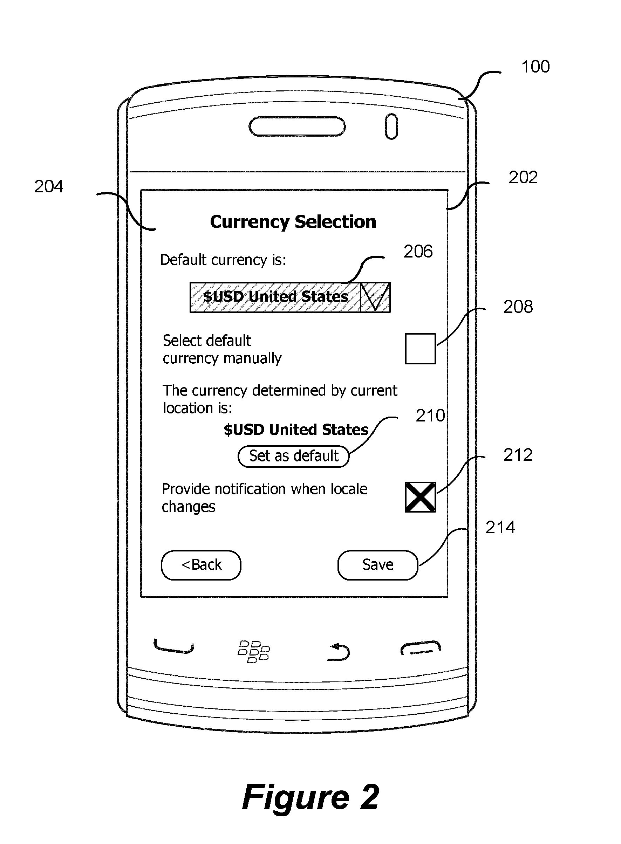

Figure 2 shows a representation of default currency preference selection on a mobile device 100. The mobile device 100 provides a screen 202 for display of a user interface and, in this example, provides a touch interface to receive user input and interaction. The preference screen 204 provides an example user selection of the default currency to be associated with the mobile device 100. The currency selection may occur during first use or configuration of the mobile device, first actuation of the currency selection, or be accessed through configuration menus of the mobile device 100 operating system. The default currency selection 204 can present the current default currency 206, for example "$ USD". The default currency may be performed by a location look up by a global positioning system (GPS), network parameters such as network identifier or service identifier, time zones or other regional parameters which can be associated with a local currency value. For example a user may select New York City as their time zone and the default currency selection may be associated with "$ USD". Depending on configuration of the operating system, or application, the default currency may be determined automatically, however the user may be able to manually select a different currency 208 in which case the currency selection 206 (shown as being greyed out) would be selectable and an alternative currency can be selected. If the default currency is different than the currency determined relative to the current location of the device, an option may be provided to set the default currency to the determined local currency 210. In addition the notification of currency changes may be configurable 212 such that a user may wish to be notified when a new currency is associated with the location. Alternatively a notification may not necessarily be provided depending on user preferences. The change in the default currency can be saved 214 by the user.

Once the default currency is configured, any monetary transaction performed on the mobile device converts the amount of the mobile payment transaction to the default currency when the currency selector is actuated. The currency selection may be presented in any number of ways with other common configuration parameters of the mobile device 100 or independently. The preference screen 204 is presented to show some of the features that may be associated with configuration currency selection on the mobile device 100.

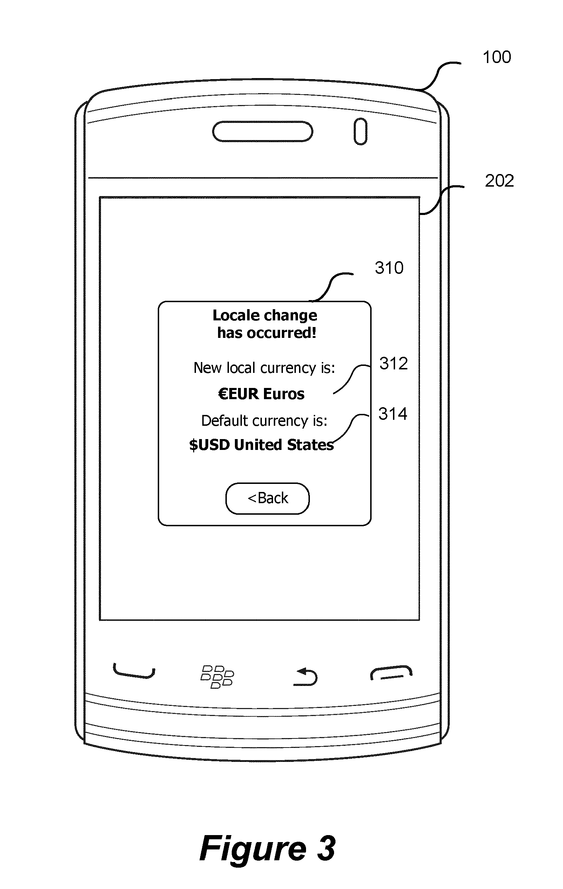

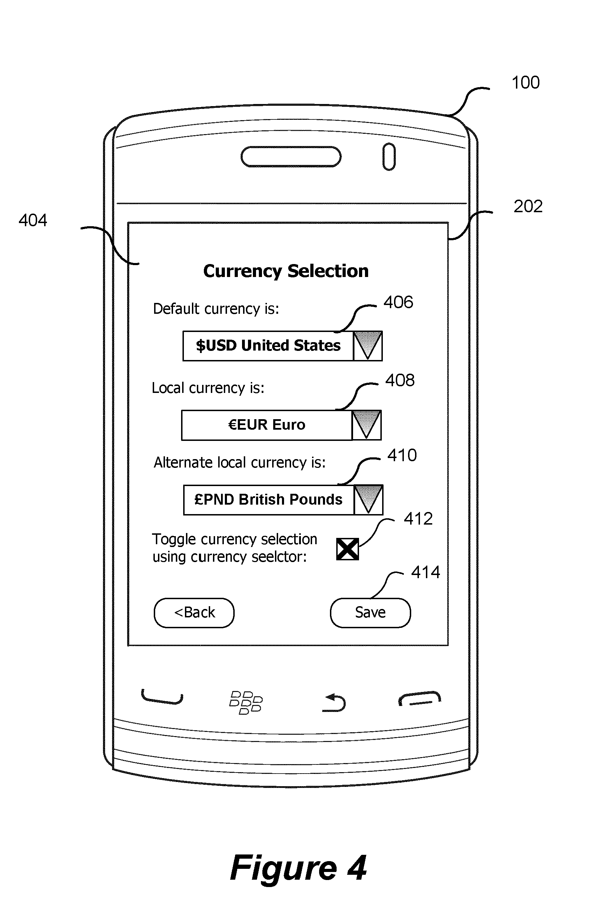

Figure 3 shows a representation of location change notification on a mobile device 100. When the mobile device 100 identifies that a location change has occurred, such as for example by GPS or by a change in network parameters, the associated currency with the geographical region is determined, if it is a different currency than the default currency. A notification window 310 identifying the new local currency 312 and the default currency 314 that was previously selected can be displayed. In certain locations, or regions, multiple currencies may be identified and the user may be presented with an option as to which local currency they would like to perform the mobile payment transactions in. The notification may also identify other information associated with the locale change such as time zone, standard formatting information such as date and time etc. If the currency is incorrect or the user wants to use other currencies, options may be presented to change the currency as shown in Figure 4. A current exchange rate that may be utilized for the transaction may also be identified or the user may be able to adjust the conversion rate to account for exchange fees if desired. The notification may be provided in a number of ways such as a pop-up window, a notification icon, a sound or a change in appearance of a visual cue on the screen.

Figure 4 shows an alternative representation of currency selection on a mobile device. The currency selection screen 404 may be presented as an alternative or to augment the currency selection screen 204. In this example the default currency is displayed 406 and the determined local currency 408 is also displayed. The user may be able to change the currencies at this screen if the predetermined selection is not desirable. In addition one or more alternate currencies may be automatically or manually selected 410 if desired if more than one currency is utilized in the region. The functionality of the currency selector may also be selected 412, for example when the currency selector is actuated it can be configured to only convert the transaction value to the default currency, or potentially toggle between currencies, or utilize alternate currencies. Conversion rates may also be identified or changed in a currency selection screen. The currency selections may then be saved 414.

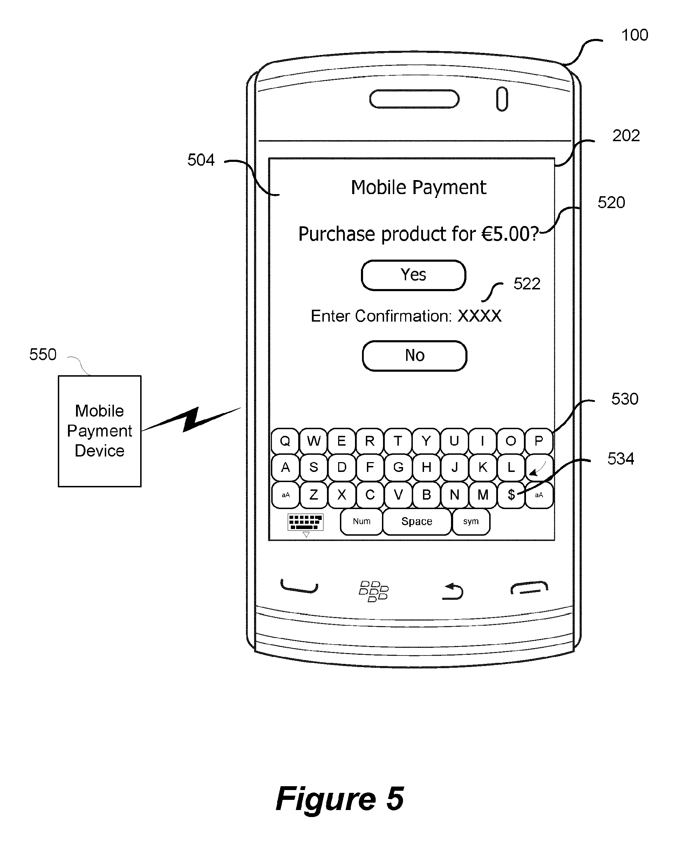

Figure 5 shows a representation of a mobile payment transaction confirmation such as a point-of-sale (POS) purchase on a mobile device 100. When a user performs a mobile payment using the mobile device 100 through an interface such as NFC short-range wireless interface, the mobile device 100 is placed near the mobile payment device 550 or interface to initiate the transaction. The mobile device 100 may support a digital wallet, or e-wallet, for storing different payment options available to the user. When the user initiates a transaction the mobile payment device 550 exchanges transaction information with the mobile device 100. The mobile device 100 can present a confirmation notification or screen 504 allowing the user to confirm that transaction is to proceed from their associated e-wallet. Additional security such as a confirmation code 522 or personal identification number (PIN) may be presented during the process for additional security. However, if the transaction currency is not in the user's default currency, for example Euros 520, the currency selector 534 of the virtual keyboard 530 displayed on the mobile device can be selected to initiate conversion of the currency to the default currency as discussed below.

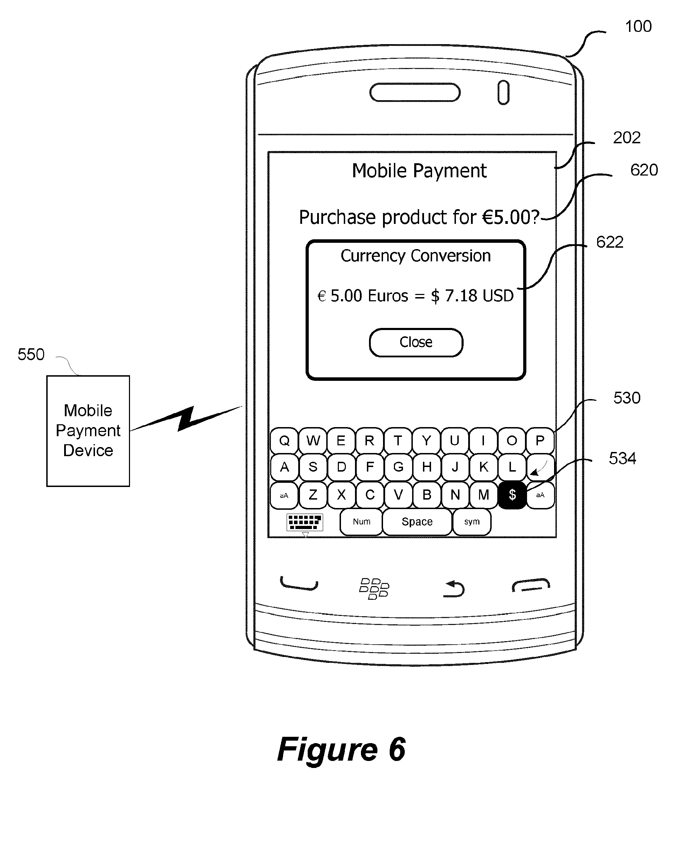

Figure 6 shows a representation of a currency conversion notification on a mobile device 100. The currency selector 534 is presented on a virtual keyboard 530 as part of one of standard keys for text entry. The currency selector or key 534 may be represented with the standard QWERTY keyboard, on a symbol or number keyboard, or as a stand alone currency key. The currency selector 534 is actuated by the user to provide conversion for a non-default currency identified in the transaction. The notification can be presented 622 on the display 202 of the mobile device 100 showing a conversion of the transaction from the local currency to the default currency. For example a €5.00 transaction would convert to $7.18 US based upon the available exchange rate. The notification may include confirmation, or acceptance, or be provided for information purposes only to the user. Although in this example the keyboard presents the currency selector using a "$", the same as the default currency, it should be understood that the keyboard may depict the currency which may or may not match the actual default currency. In this example the currency selector is identified as a currency key on the virtual keyboard, however the currency selector may be associated with a convenience key of the device, an icon, or one or more gestures input on the device. Alternatively the currency selector may be actuated prior to the transaction to automatically present a conversion notification when the transaction occurs. In this example the currency conversion notification is provided prior to accepting the transaction, however it may be provided after the transaction has occurred or at an earlier step of the mobile payment process.

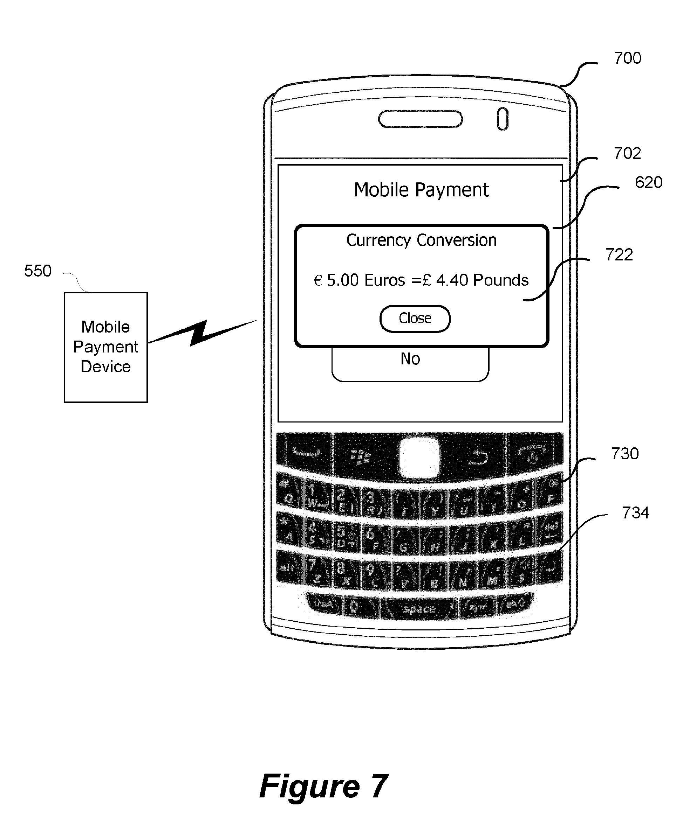

Figure 7 shows a representation of a currency conversion notification on a mobile device having a physical keyboard 730 with a currency key 732 as the currency selector. As with Figure 6 when the currency key 734 is actuated during a transaction the notification can be presented 722 showing a conversion of the transaction. However in this example conversion to an alternate currency may be shown by actuating the currency selector an additional time. For example €5.00 is equal to £4.40. Alternatively, by pressing the currency key the transaction may be converted to the default currency in the display screen of the transaction without requiring a notification window to be presented. Additional actuations of the currency selector may cycle between the default and alternate currencies. As with Figure 6, the currency selector may not be necessarily associated with a physical currency key but may be initiated by user input to the device relative to the mobile payment context. That is, within the payment process context, input or keys that are not utilized for another function may be associated with the currency selector. Alternative method may include icon selection, convenience key selection, gestures, audio or voice commands or by motion sensing of the device such as a shake gesture.

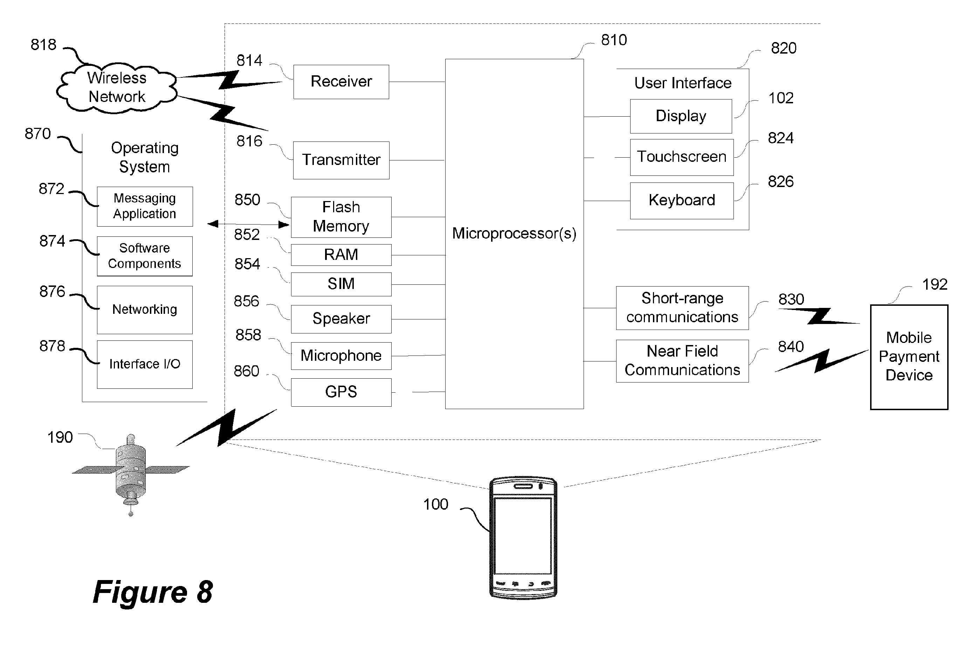

Figure 8 is a schematic depiction of an example mobile device 100 for providing currency conversion in transactions based upon locale. As shown by way of example in Figure 8, the mobile device 100, includes a processor (or microprocessor) 810 for executing one or more applications, memory in the form of flash memory 850 and RAM 852 (or any equivalent memory devices) for storing the one or more applications, related data and received documents, and a user interface 820 with which the user interacts with the device. The user interface 820 may include a display 102, a touch screen 824 and/or virtual or physical keyboard 826.

As shown by way of example in Figure 8, the mobile device 100 may include a radiofrequency (RF) transceiver comprising a receiver 816 and transmitter 814. The RF transceiver is for communication with a wireless network 802 using a wireless communication protocols such as, for example but not limited to, GSM, UMTS, LTE, HSPDA, CDMA, W-CDMA, Wi-MAX, Wi-Fi etc. A subscriber identify module (SIM) card 854 may be provided depending on the access technology supported by the device. The mobile device can be for example, a tablet, smartphone, mobile phone or cell phone. A voice-enable device would further include a microphone 858 and a speaker 856. Short-range communications 830 is provided through wireless technologies such as Bluetooth™ or wired Universal Serial Bus™ connections to other peripheries or computing devices. A near-field communication interface 840 is provided to enable interaction with NFC devices 550 such as a point-of-sale terminal. A global navigation satellite system (GNSS) receiver such as a Global Positioning System (GPS) receiver chipset 860 or other location-determining subsystem can be provided to determine location of the device or be incorporated in other components of the device.

The mobile device 100 also includes an operating system 870 and software components 872 to 878 which are described in more detail below. The operating system 870 and the software components 872 to 878 that are executed by the microprocessor 810 are typically stored in a persistent store such as the flash memory 850, which may alternatively be a read-only memory (ROM) or similar storage element (not shown). The memory may store instructions for executing the method as described below. Those skilled in the art will appreciate that portions of the operating system 870 and the software components 872 to 878, such as specific device applications, or parts thereof, may be temporarily loaded into a volatile store such as the RAM 852. Other software components can also be included, as is well known to those skilled in the art. The memory may also store currency conversion data including exchange rates and location information or instructions for retrieving the required information from repositories coupled to the network.

The subset of software applications that control basic device operations, including data and voice communication applications, may be installed on the mobile device 100 during its manufacture. Other software applications include a message application 872 that can be any suitable software program that allows a user of the mobile device 100 to send and receive electronic messages or interact with services coupled to a network for receiving transactional information. The software components 874 or software applications can provide user notification and implement transaction processing with POS devices to facilitate transactions. A networking component 876 to facilitate network interaction and interface input/output (I/O) 878 and other suitable modules (not shown). The networking component 876 can determine which interfaces the mobile device can access for IP connectivity and interact with. The interface I/O 878 may interact with physical or virtual keyboards and control communication with communication interfaces of the mobile device 100.

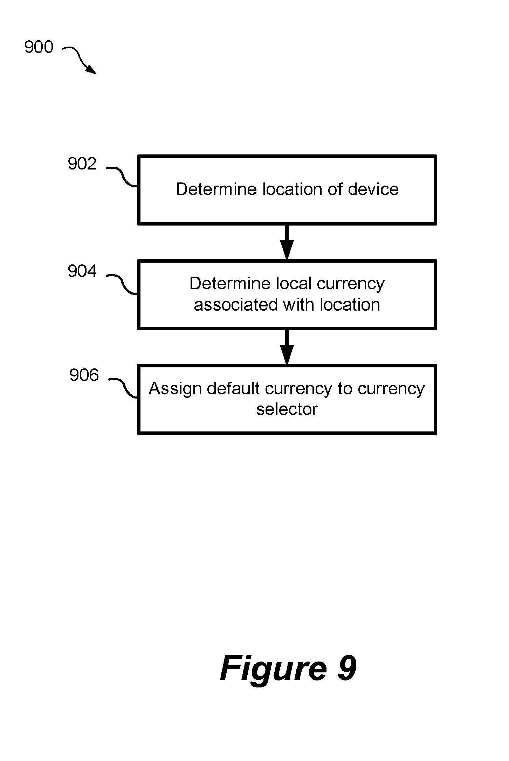

Figure 9 shows a method 900 of default currency assignment on the mobile device 100. When the mobile device 100 is first activated by a user or when the currency selector is actuated for the first time, the location of the mobile device 100 may be determined (902). The location, in the form of a location identifier may be based upon the system identifier, network identifier or by a positioning device such as GPS locations. The currency location associated with the mobile device 100 and can then be determined (904) by either a look-up in a mobile device 100 resident table or similar structure stored in memory, or by a request sent through one of the networking interfaces in identifying the currency associated with the location identifier. The currency can then be assigned as the default currency and assigned to the currency selector (906). In the case of a virtual keyboard the currency selector may be changed to show the selected currency. The currency determination may be part of default regional parameters such as data formatting or time configuration of the mobile device 100.

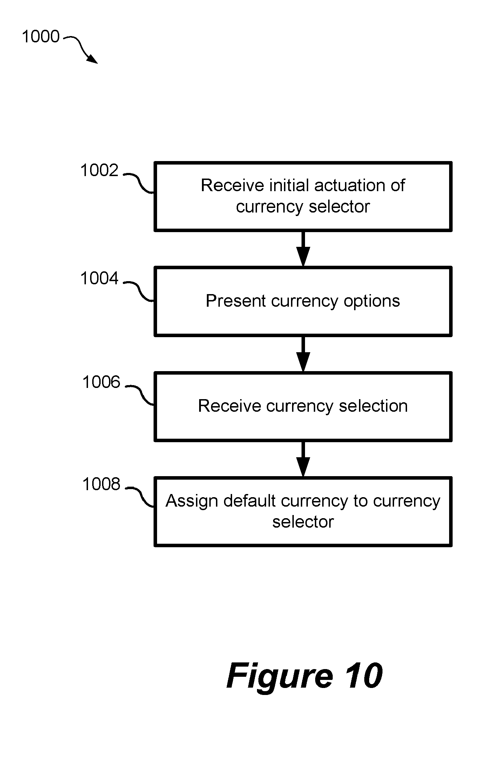

Figure 10 shows an alternative method 1000 of default currency assignment on the mobile device 100. An input is received when the currency selector is actuated for the first time on the mobile device 100 (1002) or during initial configuration of the mobile device. The available currency options are presented to the user on the display of the mobile device (1004). The currency selection by the user is received (1006) and assigned to the currency selector (1008). In the case of a virtual keyboard the currency selector may be changed to show the associated currency symbol on the key.

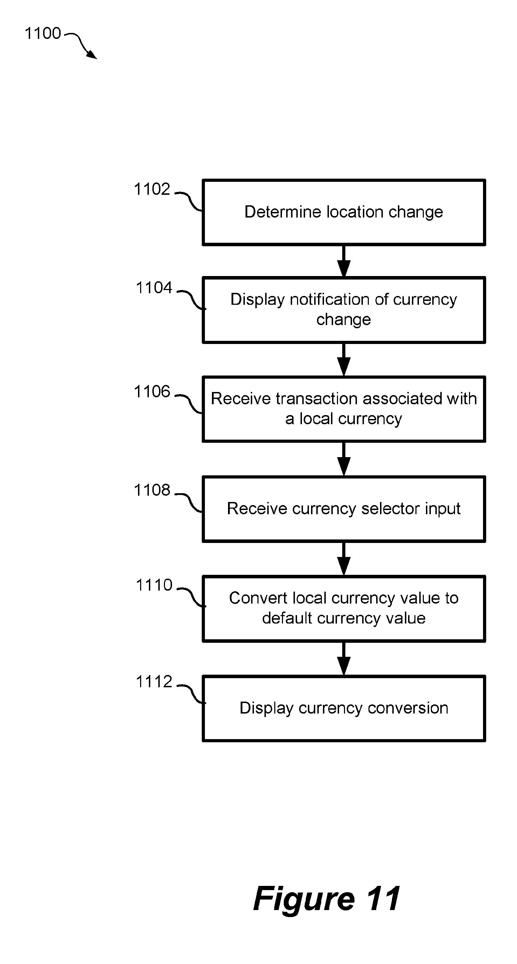

Figure 11 shows a method 1100 of currency conversion for a point-of-sale transaction on a mobile device. When the mobile device changes location to a new region or locale, where a different currency may be utilized, the mobile device determines a change in location (1102) by network identification or using a positioning system such as GPS. As part of the registration process on a new system the mobile device may determine currency associated with location (1104) either by a local look-up or to a query to a server via the wireless network. As part of determining the currency the mobile device may also determine a current conversion rate between default currency and local currency. When a mobile payment transaction is initiated using the mobile device such as with a NFC POS, the transaction associated with local currency (1106) is received at the mobile device. The currency selector input is actuated by the user providing a signal input to convert the local currency to the default currency defined on the mobile device (1108). The currency is converted (1110) using a conversion factor from the local currency value to the default currency value. The converted currency value can then be displayed to the user (1112) on the display screen by presenting a notification of the conversion change either through a separate notification to the transaction information or by conversion of the transaction information on the transaction screen. Additional input may be provided to allow the user to approve or decline the transaction on the mobile device screen. When in a new region the currency selector may show the local currency symbol while displaying the default currency symbol in the background, faded out but identifiable for selection.

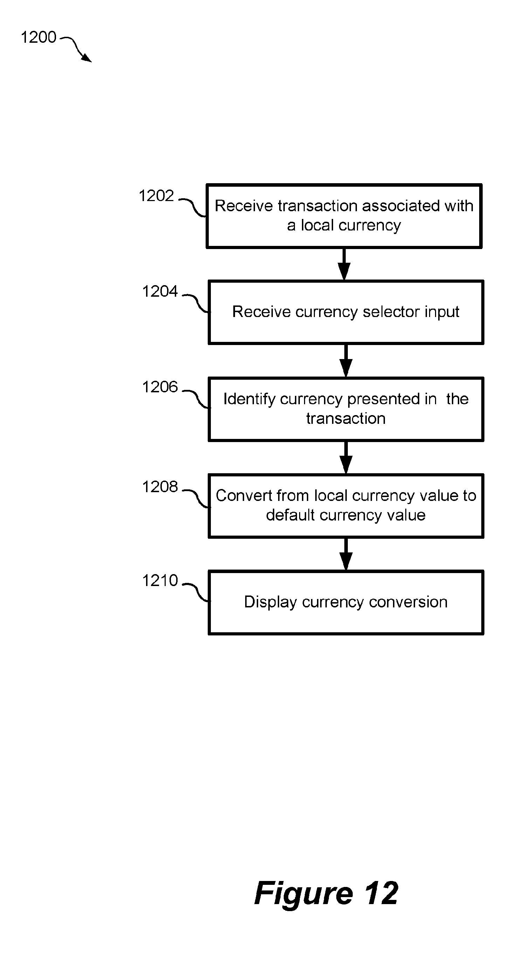

Figure 12 shows an alternative method 1200 of currency conversion for a mobile payment using a mobile device 100. A transaction is received by the mobile device 100 or processed by the mobile device 100 (1202). When the user actuates the currency selector input (1204) it is determined if a foreign currency, or non-default currency, is represented in the transaction and is identified for conversion (1206). The conversion rate for the local currency to the default currency is retrieved either from local memory or by a query through a network coupled through a wireless interface of the mobile device 100 and the value of the local currency is converted (1208) based upon the currency exchange rate and then be displayed to the user (1210). The conversion may be presented by a notification of the conversion change or by changing the display of the currency itself within a mobile payment display screen. Additional input may be provided to allow the user to approve or decline the transaction on the mobile device screen 102. In addition, the currency may be associated with multiple currencies in that subsequent presses of the currency selector input may be associated with other default currencies. For example the first press of the currency selector may be associated with $USD, where as the second press may be $CDN, wherein the display would cycle the conversion display to the desired currency based upon the defined currencies. Although the same symbol may be used for the currency different currency conversion rates may apply for the transaction when multiple currencies are supported. The user of the mobile device can now easily convert between currencies and allow the user to readily comprehend the cost of a transaction.

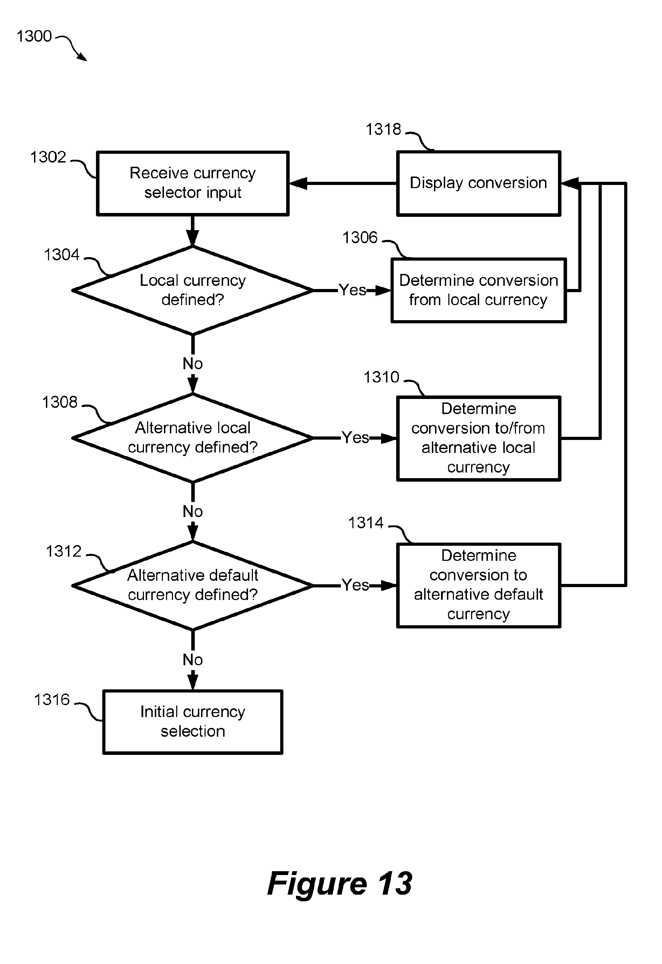

Figure 13 shows a method 1300 of multiple currency selector actuations. The current method may be used in combination with any of the previous methods for display or selection of currency for example on the first use of the currency selector or when a location change occurs. When the user presses the currency selector input (1302) the method determines if the local currency has been defined (1304). If the local currency has been defined, either automatically through detection of a location change or manually by the user selection, a conversion from the default currency to the local currency for a transaction value is determined (1306) and displayed (1318). If multiple local currencies are defined (1308), and the currency selector has previously been actuated, on a subsequent actuation the local currency may be converted to an alternative currency (1310) and displayed (1318) to the user. If an alternative default currency is defined (1312) on an actuation of the currency selector, a conversion may be done to the alternative default currency (1314) and displayed (1318). If no additional functions are defined with the currency selector, the conversion notification can be removed or if no local currencies or default currencies are defined an initial currency selection screen may be presented on first actuation (1316). The process of determining the functions that are to occur on action of the currency selector may be performed in any order and not limited to those described. The currency selector function may be configured to perform any number of conversions between one or more local currencies to and from one or more default currencies.

The example screens shown and described above in reference to the figures are provided as examples and should not be considered limiting in terms or visual presentation or content as any number of alternative configurations and implementations can be contemplated within the scope of the present disclosure. The presentation of currency selection, identification, notification, and mobile payment transaction screens may be based upon the application or operating system of a particular device and may be presented in any number of ways to facilitate mobile payment transactions using a currency selector.

Although certain methods, apparatus, and computer readable memory have been described herein, the scope of coverage of this disclosure is not limited thereto. To the contrary, this disclosure covers all methods, apparatus, computer readable memory, and articles of manufacture fairly falling within the scope of the appended claims either literally or under the doctrine of equivalents. The embodiments of the application described above are intended to be exemplary only. Those skilled in this art will understand that various modifications of detail may be made to these embodiments, all of which come within the scope of the application.

## Claims

1. A method for performing a locale specific transaction on a mobile device (100), comprising:
receiving (1108) a currency selector input (534, 734) on the mobile device actuated by a user identifying a request to convert a local currency value to a default currency value, the default currency being one of a plurality of default currencies available through actuation of the currency selector input and being assigned to the currency selector input upon an initial actuation of the currency selector or initial activation of the mobile device;
converting (1110) between the default currency and the local currency using a currency conversion factor; and
presenting (1112) on a display of the mobile device the local currency value as a default currency value.

2. The method of claim 1 further comprising receiving a mobile payment transaction request on the mobile device, the transaction defining the local currency value associated with the local currency.

3. The method of claim 2 wherein the mobile payment transaction request is received through a near field communications interface of the mobile device.

4. The method of any one of claims 1 to 3 wherein if the actuation of the currency selector is the initial actuation of the currency selector, the method further comprising presenting the plurality of currencies on the display and receiving a selection of the default currency from among the plurality of currencies and assign the default currency to the currency selector.

5. The method of any one of claims 1 to 4 further comprising assigning the plurality of default currencies to the currency selector, wherein the currencies are assigned in order of preference.

6. The method of any one of claims 1 to 5 determining a location of the mobile device and an associated default currency and assigning the default currency to the currency selector.

7. The method of claim 6 wherein the location is determined by a global positioning receiver.

8. The method of claim 6 wherein the location is determined by a wireless network parameter defined by a network identifier or system identifier associated with a wireless network on which the mobile device is registered.

9. The method of any one of claims 1 to 8 wherein the currency conversion factor is retrieved from a currency conversion database through a wireless interface of the mobile device.

10. The method of any one of claims 1 to 8 wherein the currency conversion factor is stored locally.

11. The method of any one of claims 1 to 10 further comprising determining a location of the mobile device and identifying the local currency associated with a region associated with the location and presenting a notification on the mobile device that local currency is different than the default currency.

12. The method of any one of claims 1 to 11 wherein presenting on the display of the default currency value is provided by a notification on top of a transaction display.

13. The method of any one of claims 1 to 12 wherein presenting on the display the default currency value is provided by changing the local currency value to the default currency value in a transaction display, wherein the local currency value is overwritten by the default currency value.

14. A system for performing a locale specific transaction on a mobile device (100), the system comprising:
a receiver (830, 840) for communicating with mobile payment devices;
a display (102);
a processor (810) coupled to the receiver of the mobile device; and
a memory (852) coupled to the processor containing instructions which when executed by the processor for executing the method of claims 1 to 13.

15. A computer readable memory containing instructions for performing a locale specific transaction on a mobile device, the instructions when executed by a processor performing the method of any one of claims 1 to 13.

## Amended claims

### Amended claims in accordance with Rule 137(2) EPC.

**1.** A method for performing a locale specific transaction on a mobile device (100), comprising:
receiving a mobile payment transaction request on the mobile device, the transaction defining a local currency value associated with a local currency;
receiving (1108) a currency selector input (534, 734) from selection of a currency selector key of a plurality of keys on a keyboard of the mobile device, the currency selector key actuated by a user to identify a request to convert the local currency to a default currency, the default currency associated with the currency selector key being one of a plurality of default currencies available to be assigned to the currency selector key upon an initial actuation of the currency selector key or initial activation of the mobile device;
converting (1110) the local currency value to a default currency value using a currency conversion factor between the local currency and the default currency when the currency selector input is received; and
presenting (1112) on a display of the mobile device the received local currency value as the converted default currency value.

**2.** The method of claim 1 wherein the mobile payment transaction request is received through a near field communications interface of the mobile device (100).

**3.** The method of any one of claims 1 or 2 wherein if the actuation of the currency selector key is the initial actuation, the method further comprising presenting the plurality of default currencies on the display and receiving a selection of the default currency from among the plurality of default currencies and assign the default currency to the currency selector key.

**4.** The method of any one of claims 1 to 3 wherein assigning the default currency from the plurality of default currencies to the currency selector key further comprises defining an alternate default currency wherein a subsequent actuations of the currency key converts the local currency to the alternate local currency.

**5.** The method of claim 4 wherein an alternate local currency is also associated with the currency selector key, wherein when subsequent actuation of the currency selector input is received, the local currency value is converted to the alternate local currency value.

**6.** The method of any one of claims 1 to 4 further comprising determining a location of the mobile device (902) and the associated default currency (904) and assigning the default currency to the currency selector key (906).

**7.** The method of claim 6 wherein the location is determined by a wireless network parameter defined by a network identifier (122,132) or system identifier associated with a wireless network on which the mobile device is registered or by a global positioning receiver of the mobile device (860).

**8.** The method of any one of claims 1 to 7 further comprising determining a location of the mobile device (100) and identifying the local currency associated with a region associated with the location and presenting a notification (622, 722) on the mobile device that local currency is different than the default currency.

**9.** The method of any one of claims 1 to 8 wherein presenting on the display of the default currency value is provided by a notification on top of the transaction display.

**10.** The method of any one of claims 1 to 9 wherein presenting on the display the default currency value is provided by changing the local currency value to the default currency value in a transaction display, wherein the local currency value is overwritten by the default currency value.

**11.** A computer readable memory (850, 852) containing instructions for performing a locale specific transaction on a mobile device, the instructions when executed by a processor performing the method of any one of claims 1 to 10.

**12.** A mobile device (100), comprising:
a receiver (830, 840) for receiving a locale specific mobile payment transaction request;
a display (102);
a keyboard (730,826) having a plurality of keys including a currency selector key (734);
a memory (852);
a processor (810) for executing the instructions stored in the memory to perform:
receiving the mobile payment transaction request in a local currency from the receiver;
receiving (1108) a currency selector input (534, 734) from actuation of the currency selector key, the currency selector key actuated by a user to identify a request to convert the local currency to a default currency, the default currency associated with the currency selector key being one of a plurality of default currencies available to be assigned to the currency selector key upon an initial actuation of the currency selector key or initial activation of the mobile device;
converting (1110) the local currency value to a default currency value using a currency conversion factor between the local currency and the default currency when the currency selector input is received; and
presenting (1112) on the display of the mobile device the received local currency value as the converted default currency value.

**13.** The device of claim 12 wherein determining a location of the mobile device and the associated default currency and assigning the default currency to the currency selector key.

**14.** The device of claim 12 or 13 wherein an alternate default currency is assigned to the currency selector key wherein a subsequent actuation of the currency selector key converts the local currency value to a alternate default currency value.

**15.** The device of any one of claims 12 to 14 wherein an alternate local currency is assigned to the currency selector key wherein a subsequent actuation of the currency selector key the local currency value is converted to the alternate local currency value.
